# EUROPEAN PATENT APPLICATION

(11) **EP 4 333 147 A1**
(43) Date of publication of application: **06.03.2024**
(21) Application number: 23184222.0
(22) Date of filing: 07.07.2023
(51) Int. Cl.: H01M 10/052, H01M 10/0562, H01M 10/058, H01M 50/403, H01M 50/417, H01M 50/434, H01M 50/446, H01M 10/056

(54) **METHOD OF MAKING SOLID OXIDE ELECTROLYTE MEMBRANE**

(30) Priority: 30.08.2022 TW 022110455
(71) Applicant: Hon Hai Precision Industry Co., Ltd., New Taipei City (TW); SolidEdge Solution Inc., Hsinchu 300 (TW)
(72) Inventor: LAI, HONG-ZHENG, Hsinchu 300 (TW); KAO, JING-KAI, Hsinchu 300 (TW); LIN, CHENG-TING, Hsinchu 300 (TW); CHANG, TSENG-LUNG, Hsinchu 300 (TW)
(74) Representative: Zaboliene, Reda

(57) **Abstract**

A method of making solid oxide solid oxide electrolyte membrane comprises steps (S1)-(S5). Step (S1), mixing a high molecular polymer and a first solvent to form a first mixed slurry; and homogenizing the first mixed slurry, to obtain a reagent A. Step (S2), mixing an oxide powder, a dispersant and a second solvent to form a second mixed slurry, treating the second mixed slurry, to obtain a reagent B. Step (S3), adding a protective agent into the reagent B to form a third mixed slurry, and homogenizing the third mixed slurry to obtain a reagent C. Step (S4), mixing the reagent A and the reagent C to form a fourth mixed slurry, and treating the fourth mixed slurry a fifth mixed slurry; and homogenizating the fifth mixed slurry to form a solid electrolyte slurry. And step (S5), producing the solid oxide solid oxide electrolyte membrane by a coating process.

## Description

### CROSS-REFERENCE TO RELATED APPLICATIONS

This application claims all benefits from China Patent Application No.202211045516.9, filed on August30, 2022, in the China Intellectual Property Office, the contents of which are hereby incorporated by reference.

### FIELD

The present disclosure relates to a method of making an oxide ceramic solid oxide electrolyte membrane.

### BACKGROUND

Compared to conventional liquid lithium-ion batteries, solid lithium-ion batteries have the advantages of excellent safety performance, high energy density, and good cycle performance. As a core material of a solid battery, a solid electrolyte directly determines a performance of the solid battery. Oxide solid oxide electrolyte membranes have advantages such as high ionic conductivity, wide electrochemical window, high mechanical strength, and stability to air and lithium metal. The oxide solid oxide electrolyte membranes have great potentiality.

The oxide solid oxide electrolyte membranes are generally obtained by a film formation of an oxide electrolyte powder. However, conventional methods of making oxide solid oxide electrolyte membranes have many technical problems. For example, a size of the oxide powder is large and easy to agglomerate. Side reactions such as lithium fluoride are prone to occur during a preparation process, and the oxide solid oxide electrolyte membrane is not easy to be shaped. Further, a dispersant added in the conventional methods cannot enter a cell system of the lithium ion battery, as a result, conventional oxide solid oxide electrolyte membranes have poor uniformity in a thickness direction, poor surface flatness, poor conductivity, and are prone to short circuit and open circuit.

### BRIEF DESCRIPTION OF THE DRAWINGS

Implementations of the present technology will now be described, by way of example only, with reference to the attached figures, wherein:
FIG. 1 is a flow chart of one embodiment of a method of making an oxide solid oxide electrolyte membrane.
FIG. 2 is a schematic diagram of one embodiment of a master glue mixing process.
FIG. 3 is a schematic diagram of one embodiment of a preparing oxide slurry process.
FIG. 4 is a change curve of a particle size of Li₇La₃Zr₂O₁₂ (LLZO) with a grinding time before and after a nano-micronization treatment of LLZO slurry of one embodiment.
FIG. 5 is a schematic diagram of one embodiment of a process of mixing oxide slurry.
FIG. 6 is a schematic diagram of one embodiment of a mixing process of solid electrolyte of one embodiment.
FIG. 7 is a schematic diagram of one embodiment of producing an oxide solid oxide electrolyte membrane by roll-to-roll (RTR) coating method.
FIG. 8 is a schematic diagram of a solid oxide electrolyte membrane obtained by the method shown in FIG. 1.

### DETAILED DESCRIPTION

The disclosure is illustrated by way of example and not by way of limitation in the figures of the accompanying drawings in which like references indicate similar elements. It should be noted that references to "another," "an," or "one" embodiment in this disclosure are not necessarily to the same embodiment, and such references mean "at least one."

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts have been exaggerated to illustrate details and features of the present disclosure better.

Several definitions that apply throughout this disclosure will now be presented.

The term "substantially" is defined to be essentially conforming to the particular dimension, shape, or other feature which is described, such that the component need not be exactly or strictly conforming to such a feature. The term "comprise," when utilized, means "include, but not necessarily limited to"; it specifically indicates open-ended inclusion or membership in the so-described combination, group, series, and the like. The term of "first", "second" and the like, are only used for description purposes, and should not be understood as indicating or implying their relative importance or implying the number of indicated technical features. Thus, the features defined as "first", "second" and the like expressly or implicitly include at least one of the feature. The term of "multiple times" means at least two times, such as two times, three times, etc., unless otherwise expressly and specifically defined.

A method of making the oxide solid oxide electrolyte membrane provided by the disclosure can be used for making any oxide ceramic solid oxide electrolyte membrane. For example, the method can be used to but not limited to Li₇La₃Zr₂O₁₂ (LLZO)solid oxide electrolyte membrane, Li_{1.3}Al_{0.3}Ti_{1.7}P₃O₁₂ (LATP)solid oxide electrolyte membrane, Li_{1.5}Al_{0.5}Ge_{1.5}(PO₄)₃ (LAGP)solid oxide electrolyte membrane, and Li_{0.5}La_{0.5}TiO₃ (LLTO)solid oxide electrolyte membrane.

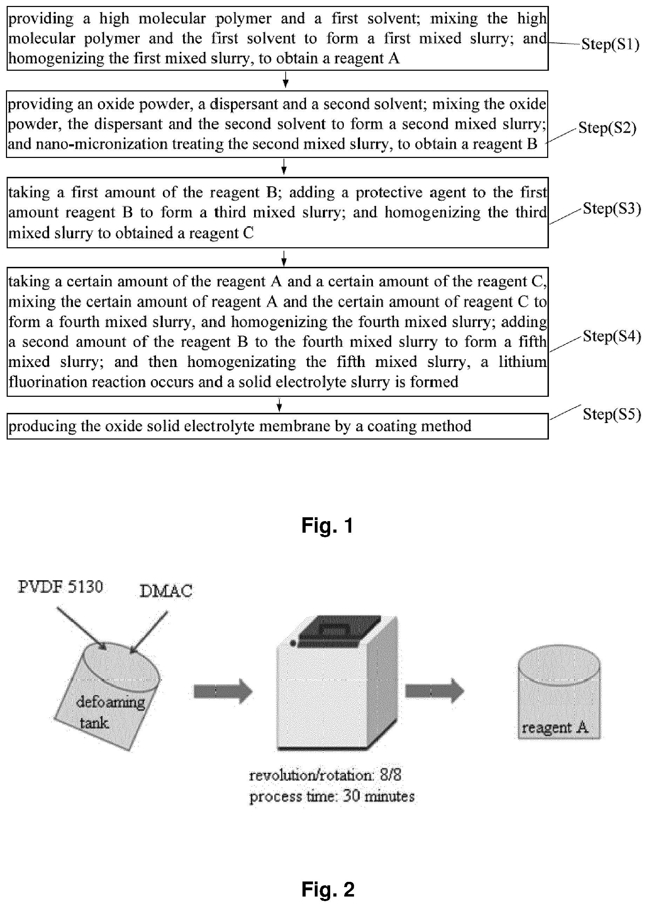

Referring to FIG. 1, one embodiment is described in relation to a method of making an oxide ceramic solid oxide electrolyte membrane. The method comprises the following steps (S1)-(S5).

Referring to FIG. 2, step (S1), a master glue mixing process, the process comprises steps of providing a high molecular polymer and a first solvent; mixing the high molecular polymer and the first solvent to form a first mixed slurry; and homogenizing the first mixed slurry, to obtain a reagent A.

In one embodiment, the first mixed slurry is homogenized until the high molecular polymer and the first solvent are mixed uniformly to form colorless, translucent and flowable slurry. The colorless, translucent and flowable slurry is the reagent A.

In one embodiment, the first mixed slurry is homogenized by a vacuum deaeration mixer. The high molecular polymer and the first solvent are added to a defoaming tank of the vacuum deaeration mixer, to homogenize the first mixed slurry. An order in which the high molecular polymer and the first solvent are added to the defoaming tank is not limited. In one embodiment, the first solvent is first added to the defoaming tank, and then the high molecular polymer is added to the first solvent to obtain the first mixed slurry, and the first mixed slurry is homogenized by the vacuum deaeration mixer.

The high molecular polymer can be at least one of PVDF, PMMA, PEO, PI and PS. In one embodiment, the high molecular polymer is PVDF.

The first solvent is used to dissolve the high molecular polymer. The first solvent is an organic solvent. The first solvent can be but not limit to Dimethylacetamide (DMAC), N-methylpyrrolid one (NMP), Dimethyl sulfoxide (DMSO), or Dimethylformamide (DMF). In one embodiment, the first solvent is DMAC.

In one embodiment, the high molecular polymer is PVDF 5130 powder, the first solvent is DMAC, a process parameter of using the vacuum deaeration mixer to homogenize the first mixed slurry is: revolution/rotation: 8/8, a rotating speed of the vacuum deaeration mixer is 1200rpm, and a process time is 30 minutes. In other embodiments, the process parameters, rotating speed and process time of using the vacuum deaeration mixer to homogenize the first mixed slurry can be adjusted according to the actual conditions, such as the type and amount of the high molecular polymer and the first solvent.

In one embodiment, a proportion of an added amount of the high molecular polymer in the whole oxide solid oxide electrolyte membrane is greater than 0wt. % and less than or equal to 50wt. %. In another embodiment, the proportion of the added amount of the high molecular polymer in the whole oxide solid oxide electrolyte membrane is greater than or equal to 10wt. % and less than or equal to 50wt. %.

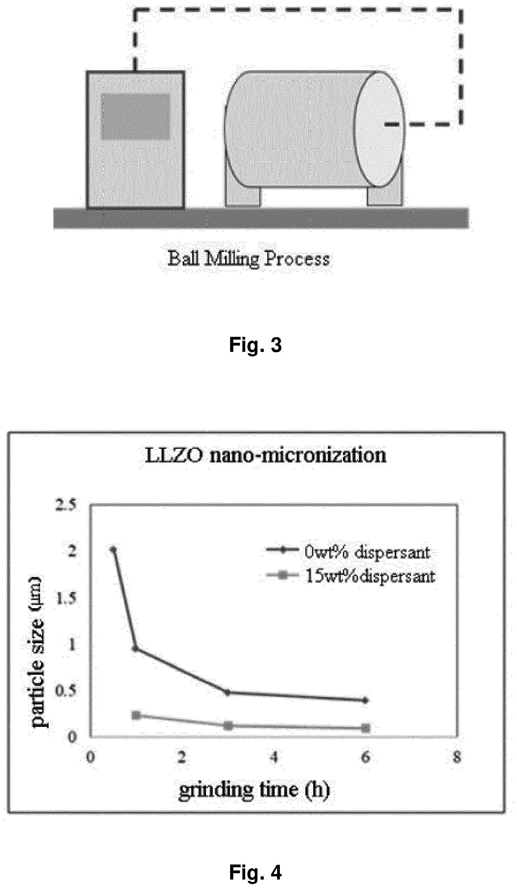

Referring to FIG. 3, step (S2), a process of preparing oxide slurry, the process comprises steps of: providing an oxide powder, a dispersant and a second solvent; mixing the oxide powder, the dispersant and the second solvent to form a second mixed slurry; and nano-micronization treating the second mixed slurry, to obtain a reagent B.

The dispersant is a high molecular polymer; the high molecular polymer can enter a cell of lithium ion battery, thereby improving conductivity and a surface flatness of the oxide solid oxide electrolyte membrane. In some embodiments, the high molecular polymer is at least one of PVDF, PMMA, PEO, PI, and PS. In one embodiment, the dispersant is PMMA.

The second solvent is an organic solvent. The second solvent can be but not limit to Dimethylacetamide (DMAC), N-methylpyrrolidone (NMP), Dimethyl sulfoxide (DMSO), and Dimethylformamide (DMF). In one embodiment, the second solvent is DMAC. The second solvent and the first solvent in step (S1) can be the same or different. In one embodiment, the second solvent is the same as the first solvent. In one embodiment, a proportion of the dispersant added in the oxide slurry is greater than 0wt. % and less than or equal to 50wt. %. In another embodiment, the proportion of the dispersant added in the oxide slurry is greater than or equal to 10wt. % and less than or equal to 20wt. %.

The oxide powder is an oxide ceramic powder. The oxide ceramic powder can be but not limited to Li₇La₃Zr₂O₁₂ (LLZO) powder, Li_{1.3}Al_{0.3}Ti_{1.7}P₃O₁₂ (LATP) powder, Li_{1.5}Al_{0.5}Ge_{1.5}(PO₄)₃ (LAGP) powder, and Li_{0.5}La_{0.5}TiO₃ (LLTO) powder.

In one embodiment, the oxide powder is LLZO powder, the dispersant is PMMA, an amount of dispersant accounts for 15wt. % of the LLZO slurry, the second solvent is DMAC, a process time of the nano-micronization treatment is 2.5 hours, and a process temperature is 8-10°C. In other embodiments, the process time and process temperature of the nano-micronization treatment can be adjusted according to actual situations.

In one embodiment, the nano-micronization treatment is carried out by wet grinding, and nano oxide powder with small particle size can be obtained by adding the dispersant. FIG. 4 is a change curve of the particle size of LLZO with a grinding time before and after the nano-micronization treatment of the LLZO slurry. It can be seen that from FIG. 4, before adding the dispersant, the particle size D50 can only reach 400nm after grinding6 hours; however, after adding the dispersant, the particle size can reach 100nm after grinding for 6 hours. It can also be seen that before adding the dispersant, a cumulative particle size distribution percentage is D50>400m, and D90>1µm; after adding the dispersant, the cumulative particle size distribution percentage is D50<150nm, and D90<1µm. The change curve in FIG. 4 shows that an addition of the dispersant can greatly reduce the grinding time and the particle size of LLZO.

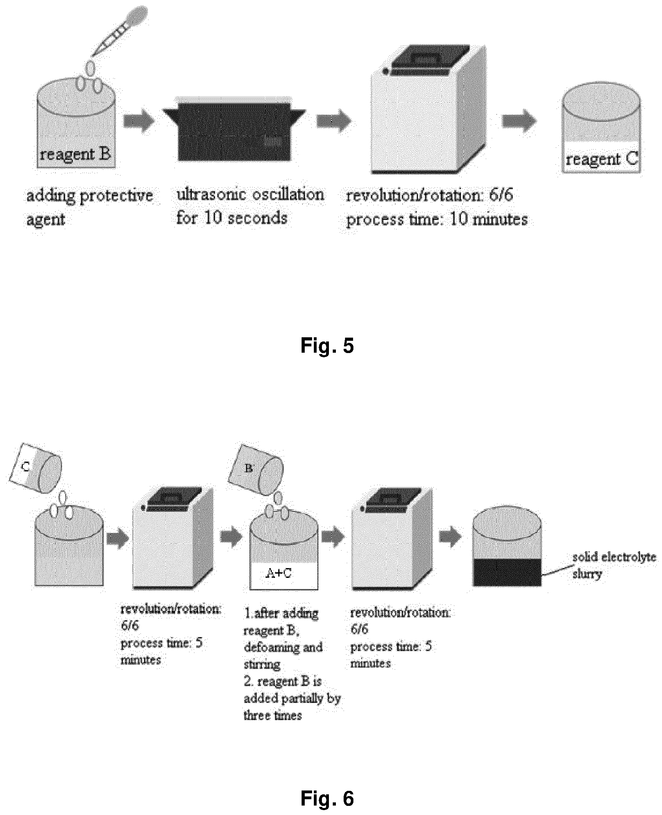

Referring to FIG. 5, Step 3: a process of mixing the oxide slurry, the process comprises steps of taking a certain amount of the reagent B; adding a certain amount of protective agent to the reagent B and performing ultrasonic oscillations to form a third mixed slurry; and then homogenizing the third mixed slurry to obtain a reagent C.

The step of performing ultrasonic oscillations can be optional. In one embodiment, when the certain amount of protective agent is added to the reagent B, no ultrasonic oscillation is performed. In some embodiments, when adding the certain amount of protective agent to the reagent B, other stirring methods, such as electric stirring and magnetic stirring, are used instead of the ultrasonic oscillation.

In one embodiment, homogenizing the third mixed slurry of the reagent B and the protective agent by the vacuum deaeration mixer.

The protective agent is an acid inhibitor. For example, the acid inhibitor can be phosphoric acid, acetic acid, hydrochloric acid, sulfuric acid, and the like. In one embodiment, the protective agent is a weak acid, which is beneficial to avoid an occurrence of side reactions such as hydration reaction. In one embodiment, the protective agent is a mixed acid of acetic acid and phosphoric acid. Since the LLZO slurry is a strong alkaline material, side reactions are easy to occur when the LLZO slurry is mixed with polymers such as PVDF, PMMA, PEO, PI, PS, and the like, an addition of the acid inhibitors can inhibit the occurrence of the side reactions. Moreover, since the LLZO slurry has strong alkaline, the LLZO slurry is easy to produce lithium fluorination reaction with a fluorine-containing polymer, such as PVDF, and then the LLZO slurry gels and loses fluidity, the addition of the acid inhibitors can reduce the lithium fluorination reaction. Therefore, during the process of mixing the oxide slurry, the acid inhibitor is added into part of the LLZO slurry first, ultrasonic oscillation is used to mix the part of the LLZO slurry and the acid inhibitor evenly, and then the part of LLZO slurry with the acid inhibitor is added into the PVDF master glue; the LLZO slurry can be protected and the occurrence of side reactions such as lithium fluorination reaction can be avoided.

In one embodiment, in step (S3), a weight percentage of an amount of the reagent B in the third mixed slurry is greater than 0wt. % and less than or equal to 50wt. %. An amount of the protective agent accounts for 1-10wt. % of the total weight of the third mixed slurry. In one embodiment, a mass ratio between the reagent B and the protective agent is in a range of 15:1 to 25:1.

A time of the ultrasonic oscillations; and the process parameters, rotating speed and process time of using the vacuum deaeration mixer to homogenize the third mixed slurry are selected according to the actual situation. In one embodiment, adding the protective agent to the reagent B and perform in gultra sonic oscillation for about 10 seconds, the percentage of the amount of the reagent B in the total weight of the third mixed slurry is greater than 0wt. % and less than or equal to 50wt. %, and the amount of the protective agent accounts for 1-10wt. % of the total weight of the third mixed slurry; the process parameter of using the vacuum deaeration mixer to homogenize the third mixed slurry is: revolution/rotation: 6/6, a rotating speed of the vacuum deaeration mixer is 900rpm, and a process time is 10 minutes.

Referring to FIG. 6, step (S4), a mixing process of solid electrolyte, the mixing process comprises taking a certain amount of the reagent A and a certain amount of the reagent C, mixing the reagent A and the reagent C to form a fourth mixed slurry, and homogenizing the fourth mixed slurry; adding a certain amount of the reagent B to the fourth mixed slurry to form a fifth mixed slurry; and then homogenizating the fifth mixed slurry, a lithium fluorination reaction occurs and a solid electrolyte slurry is formed.

In one embodiment, homogenizing the fourth mixed slurry until the fourth mixed slurry appears uniform milky white, and homogenizating the fifth mixed slurry until the fifth mixed slurry appears brown, the lithium fluorination reaction occurs and the solid electrolyte slurry is formed.

In one embodiment, in step (S4), in the fifth mixed slurry, the reagent A accounts for 20-60% of the fifth mixed slurry, the reagent C accounts for 20-50% of the fifth mixed slurry, and the reagent B accounts for 20-50% of the fifth mixed slurry. In one embodiment, in the fifth mixed slurry, a mass ratio of the reagent A, the reagent B and the reagent C is 1:(0.5-0.6):(0.15-0.2).

In one embodiment, homogenizing the fourth mixed slurry by the vacuum deaeration mixer. In one embodiment, homogenizing the fifth mixed slurry by the vacuum deaeration mixer.

In some embodiments, the certain amount of the reagent B is added to the fourth mixed slurry of the reagent A and the reagent C partially by multiple times. In one embodiment, the certain amount of the reagent B is added to the fourth mixed slurry of the reagent A and the reagent C partially by three times. In one embodiment, the reagent A accounts for 20-60% of the fifth mixed slurry, and the reagent C accounts for 20-50% of the fifth mixed slurry, the process parameter of using the vacuum deaeration mixer to homogenize the fourth mixed slurry of the reagent A and the reagent C is: revolution/rotation: 6/6, a rotating speed of the vacuum deaeration mixer is 900rpm, and a process time is 10 minutes. The reagent B accounts for 20-50% of the fifth mixed slurry, and the reagent B is added to the fourth mixed slurry of the reagent A and the reagent C partially by three times, the process parameter of using the vacuum deaeration mixer to homogenize the fifth mixed slurry of the reagent A, the reagent C, and the reagent B is: revolution/rotation: 6/6, and a process time is 5 minutes. In other embodiments, the process parameters, the rotating speed and the process time of using the vacuum deaeration mixer to homogenize the fifth mixed slurry can be adjusted according to the actual conditions.

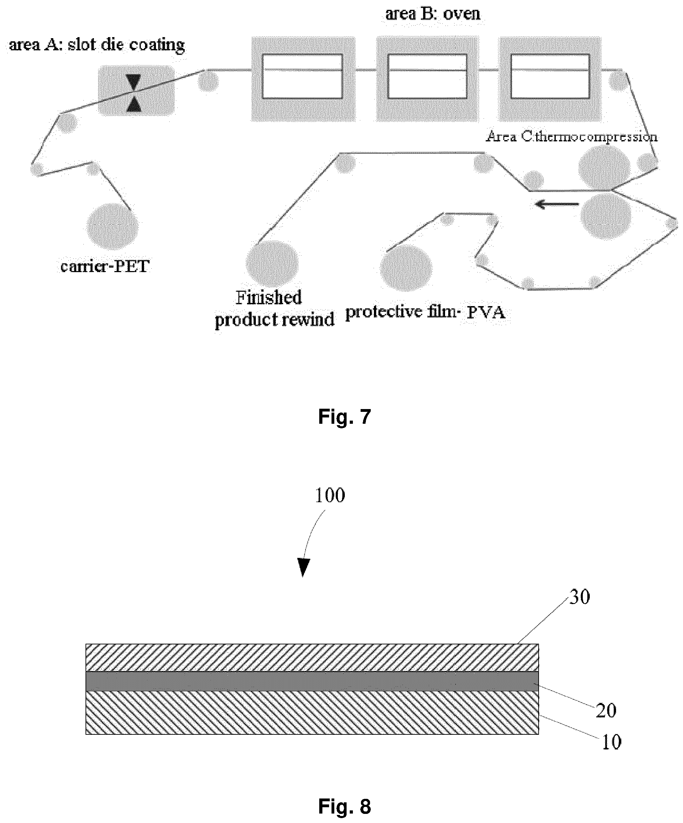

Referring to FIG. 7, step (S5), producing the oxide solid oxide electrolyte membrane by a coating method.

The coating method can be selected according to actual needs, such as: roll-to-roll (RTR) coating, screen printing, flat coating, squeegee printing, and the like.

In one embodiment, the coating method is the RTR coating. The RTR coating method can be but not limited to slot die coating, comma coating or gravure coating. In one embodiment, the solid oxide electrolyte membrane is continuous produced by the slot die coating.

In one embodiment, during a process of the RTR coating method, a carrier is made from a material with high mechanical strength and easy peeling, a protective film is made from a material with excellent flexibility and easy peeling. In one embodiment, the carrier is polyethylene terephthalate (PET), and the protective film is polyvinyl alcohol resin (PVA). A thickness of the carrier is in a range from 10µm to 200µm, and a thickness of the protective film is in a range from 10µm to 200µm.

In one embodiment, the LLZO solid oxide electrolyte membrane is continuous produced by the slot die coating, the carrier is PET with a thickness of 125µm, and the carrier provides sufficient mechanical strength; the protective film is PVA with a thickness of 50µm, and the protective film has excellent flexibility. Referring to FIG. 7, area A is a slot die coating area. Area B is an oven area, a front section of the RTR coating is a low temperature section stacking, and a temperature is ranged from 50°C to 120°C, to avoid bubbles or unevenness on a film surface; a latter section is a drying section, and a temperature is ranged from 50°C to 200°C, to remove excess solvent in the film. Area C is a thermocompression area, and a temperature is ranged from 50°C to 200°C, tiny defects in the solid oxide electrolyte membrane can be repaired before winding the solid oxide electrolyte membrane by high temperature thermocompression, and thus the process time is reduced and the yield rate is improved.

Referring to FIG. 8, a solid electrolyte structure 100 is obtained using the above method. The solid electrolyte structure 100comprises a carrier 10, a solid oxide electrolyte membrane 20, and a protective film 30. The solid oxide electrolyte membrane 20 is located between the carrier 10 and the protective film 30.A thickness of the carrier 10 is ranged from 10µm to 200µm. In a preferred embodiment, a thickness of the solid oxide electrolyte membrane 20 is ranged from 10 to 50µm, and a thickness of the protective film 30 is ranged from 10µm to 200µm.

In one embodiment, the carrier 10 is PET with a thickness of 125µm, the protective film 30 is PVA with a thickness of 50µm, and the solid oxide electrolyte membrane 20 is LLZO solid oxide electrolyte membrane with a thickness ranged from 25 to 50µm.

The method of making the oxide ceramic solid oxide electrolyte membrane has the following advantages. First, the oxide slurry is grinded by wet grinding, the high molecular polymer dispersant is added in the grinding process, and the high molecular polymer dispersant can enter into the cell system of the lithium ion battery; thereby improving the conductivity of the oxide solid oxide electrolyte membrane and the surface flatness of the electrolyte membrane. Second, the protective agent is added during the preparation of the solid oxide electrolyte membrane, the side reactions of oxide slurry and polymer dispersant can be avoided; especially when the dispersant is the fluorine-containing polymer, such as PVDF, the problem that the LLZO slurry produces lithium fluorination reaction with the fluorine-containing polymer, and make the LLZO slurry gel and lose fluidity can be avoided. During the process of mixing slurry, the protective agent is added into part of the oxide slurry first, and the ultrasonic vibration is used to mix evenly; and then the part of LLZO slurry with the acid inhibitor is added into the PVDF master glue; the LLZO slurry can be protected and the occurrence of side reactions such as lithium fluorination reaction can be avoided.

The oxide ceramic solid oxide electrolyte membrane obtained by the method has the following advantages. The thickness of the solid oxide electrolyte membrane is small, and the surface of the solid oxide electrolyte membrane is substantially free of particles, and the surface flatness is relatively high, and thus the oxide solid oxide electrolyte membrane has low impedance and high electrical conductivity. Moreover, the oxide solid state electrolyte membrane has high mechanical properties, thereby prolonging a service life of the solid lithium battery.

It is to be understood that the above-described embodiments are intended to illustrate rather than limit the present disclosure. Variations may be made to the embodiments without departing from the spirit of the present disclosure as claimed. Elements associated with any of the above embodiments are envisioned to be associated with any other embodiments. The above-described embodiments illustrate the scope of the present disclosure but do not restrict the scope of the present disclosure.

Depending on the embodiment, certain of the steps of a method described may be removed, others may be added, and the sequence of steps may be altered. The description and the claims drawn to a method may include some indication in reference to certain steps. However, the indication used is only to be viewed for identification purposes and not as a suggestion as to an order for the steps.

## Claims

1. A method of making a solid oxide electrolyte membrane, comprising:
step (S1), providing a high molecular polymer and a first solvent; mixing the high molecular polymer and the first solvent to form a first mixed slurry; and homogenizing the first mixed slurry, to obtain a reagent A;
step (S2), providing an oxide powder, a dispersant and a second solvent; mixing the oxide powder, the dispersant and the second solvent to form a second mixed slurry; and nano-micronization treating the second mixed slurry, to obtain a reagent B;
Step (S3), adding a protective agent into a first amount of the reagent B to form a third mixed slurry; and homogenizing the third mixed slurry to obtain a reagent C;
step (S4), mixing an adequate amount of reagent A and an adequate amount of reagent C to form a fourth mixed slurry, and homogenizing the fourth mixed slurry; adding a second amount of the reagent B into the fourth mixed slurry to form a fifth mixed slurry; and a lithium fluorination reaction occurs after homogenizating the fifth mixed slurry, to obtain a solid electrolyte slurry; and
step (S5), producing the solid oxide electrolyte membrane by a coating process.

2. The method of claim 1, wherein in step (S1), the first mixed slurry is homogenized until the high molecular polymer and the first solvent are mixed uniformly to form a colorless, translucent and flowable slurry.

3. The method of claim 1, wherein in step (S1), the first solvent is first added to the defoaming tank, and then the high molecular polymer is added to the first solvent to obtain the first mixed slurry.

4. The method of claim 1, wherein in step (S2), the dispersant is a high molecular polymer selected from PVDF, PMMA, PEO, PI and PS.

5. The method of claim 1, wherein the oxide powder is an oxide ceramic powder.

6. The method of claim 5, wherein the oxide ceramic powder is a Li₇La₃Zr₂O₁₂ (LLZO) powder.

7. The method of claim 1, wherein the high molecular polymer in step (S1) is PVDF; the dispersant is PMMA; and the first solvent and the second solvent are Dimethylacetamide (DMAC).

8. The method of claim 1, wherein in step (S3), the protective agent is an acid inhibitor.

9. The method of claim 1, wherein the protective agent is a mixture of acetic acid and phosphoric acid.

10. The method of claim 1, wherein in step (S2), nano-micronization treating the second mixed slurry by wet grinding.

11. The method anyone of claims 1-10, wherein in step (S2), a weight percentage of the dispersant added in the oxide slurry is greater than or equal to 10% and less than or equal to 20%.

12. The method anyone of claims 1-10, wherein in step (S3), a weight percentage of the first amount of the reagent B in the third mixed slurry is less than or equal to 50%.

13. The method anyone of claims 1-10, wherein in step (S3), a weight percentage of the protective agent in the third mixed slurry is greater than or equal to 1wt. % and less than or equal to 10wt. %.

14. The method anyone of claims 1-10, wherein in step (S3), a mass ratio between the reagent B and the protective agent is in a range of 15:1 to 25:1.

15. The method anyone of claims 1-10, wherein in step (S4), in the fifth mixed slurry, a mass ratio of the reagent A, the reagent B and the reagent C is 1 : (0.5-0.6) : (0.15-0.2).
